# EUROPEAN PATENT APPLICATION

(11) **EP 4 459 405 A1**
(43) Date of publication of application: **06.11.2024**
(21) Application number: 23171584.8
(22) Date of filing: 04.05.2023
(51) Int. Cl.: G05B 23/02

(54) **PREDICTION OF A TEMPORAL AVAILABILITY PARAMETER ASSOCIATED WITH AN EVENT RELATED TO A MANUFACTURING MACHINE**

(71) Applicant: Siemens Aktiengesellschaft, 80333 München (DE)
(72) Inventor: The designation of the inventor has not yet been filed
(74) Representative: Siemens Patent Attorneys

(57) **Abstract**

A method for determining a prediction of a temporal parameter, e.g., a temporal parameter of machine availability, associated with an event is provided. The event is associated with a machine deployed in a manufacturing process. An occurrence of the event is determined based on an event log associated with the machine. The prediction of the temporal parameter is determined based on the event and on data of at least one parameter associated with the manufacturing process.

## Description

### TECHNICAL FIELD

Various examples of the disclosure generally pertain to monitoring and maintaining a manufacturing machine deployed in a manufacturing process. Various examples of the disclosure specifically pertain to a method for determining, based on an event associated with the manufacturing machine and data of one or more parameters associated with the manufacturing process, a prediction of a temporal parameter associated with the event, e.g., a temporal parameter of machine availability associated with the event.

### BACKGROUND

Productivity of the production or manufacturing machines represents an important factor in a manufacturing process of the manufacturing industry to ensure sustainable competitiveness and success of the company. The productivity is one of the most important contributors to overall equipment effectiveness (OEE). The productivity of a machine deployed in a manufacturing process depends on multiple aspects like product type to be produced, actual machine conditions during and before manufacturing, settings, and conditions of the working tools, and many others.

An inability of a machine to produce a part and corresponding downtime causes production losses related to the delay in the part manufacturing and risks to deliver parts not in time. The reasons for the machine downtime and process interruptions are in most cases unknown and typically require a very complex analysis process to avoid them in the future and to adjust the manufacturing process.

Currently, there are multiple approaches to address manufacturing delays focusing on detecting irregularities or anomalies in order to better estimate a need for maintenance. Most of them are focused on the detection of the anomalous behavior of time series data from various sensors to identify events of machine component failures.

However, such available approaches rely mainly on machine sensor data and consequently are not able to predict machine downtime and process interruptions reliably and precisely.

### SUMMARY

Therefore, a need exists for advanced techniques for monitoring and maintaining machines deployed in a manufacturing process. Specifically, a need exists for precisely and reliably predicting a temporal parameter (e.g., a temporal parameter of machine availability) associated with an event associated with a machine deployed in a manufacturing process, e.g., a downtime of the machine and/or a probability of an occurrence of the downtime.

This need is met by the features of the independent claims. The features of the dependent claims define embodiments.

A computer-implemented method is provided. The method comprises determining, based on an event log associated with a machine deployed in a manufacturing process, an occurrence of an event associated with the machine. The method further comprises obtaining data of at least one parameter associated with the manufacturing process. The method also comprises determining, based on the event and the data, a prediction of a temporal parameter associated with the event.

A computing device comprising a processor and a memory is provided. Upon loading and executing program code from the memory, the processor is configured to perform a method. The method comprises determining, based on an event log associated with a machine deployed in a manufacturing process, an occurrence of an event associated with the machine. The method further comprises obtaining data of at least one parameter associated with the manufacturing process. The method also comprises determining, based on the event and the data, a prediction of a temporal parameter associated with the event.

A computer program product or a computer program or a computer-readable storage medium including program code is provided. The program code can be executed by at least one processor. Executing the program code causes the at least one processor to perform a method. The method comprises determining, based on an event log associated with a machine deployed in a manufacturing process, an occurrence of an event associated with the machine. The method further comprises obtaining data of at least one parameter associated with the manufacturing process. The method also comprises determining, based on the event and the data, a prediction of a temporal parameter associated with the event.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG. 1: schematically illustrates an exemplary system for a manufacturing process according to various examples.
- FIG. 2: schematically illustrates a block diagram of a computing device according to various examples.
- FIG. 3: is a flowchart of a method according to various examples.
- FIG. 4: schematically illustrates an exemplary working flow according to various examples.

### DETAILED DESCRIPTION OF THE DRAWINGS

Some examples of the present disclosure generally provide for a plurality of circuits or other electrical devices or cloud-based platforms. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various examples of the disclosure generally pertain to a method for determining a prediction of a temporal parameter associated with an event. The event is associated with a machine deployed in a manufacturing process. An occurrence of the event is determined based on an event log associated with the machine. The prediction of the temporal parameter is determined based on the event and on data of at least one parameter associated with the manufacturing process.

As a general rule, a log of events that occur in a computer system or a computer-controlled machine, such as problems, errors, or just information on current operations, may be kept during a logging procedure. These events may occur in the operating system or in other software for controlling a machine. A message or log entry may be recorded for each such event. These log messages can then be used to monitor and understand the operation of the system or the machine, to debug problems, or during an audit. Logging may be particularly important in multi-user software or systems, e.g., deployed in a manufacturing process for controlling and monitoring various machines, to have a central overview of the operation of the system or the manufacturing process.

For example, Manufacturing Equipment/Machine Maintenance Software is one example of such multi-user software deployed in manufacturing processes. The software helps organizations improve asset, e.g., machines, availability and reliability through strategically planned maintenance. The software may collect maintenance plans for production machines, and machine repair histories for identifying recurring issues and implement changes to maintenance procedures. The software may further communicate maintenance schedules with other machines to ensure that all or most of the machines deployed in a manufacturing process can be available for service in a predefined duration of time.

As an alternative or additional example, manufacturing execution systems are computerized systems used in manufacturing to track and document the transformation of raw materials to finished goods. Manufacturing execution systems may provide information that helps manufacturing decisionmakers understand how current conditions on the plant floor can be controlled to improve production output. Manufacturing execution systems may work as real-time monitoring systems to enable the control of multiple elements of the manufacturing process, e.g. inputs, personnel, machines, and support services. Manufacturing execution systems may operate across multiple function areas, for example, management of product definitions across the product life cycle, resource scheduling, order execution and dispatch, production analysis, downtime management for OEE, product quality, or materials track and trace. Manufacturing execution systems may create the "as-built" record, capturing the data, processes and outcomes of the manufacturing process. As such, documentation of processes, events, and actions may be collected and stored.

According to various examples, messages may be written to a file, called a log file. Alternatively or additionally, the messages may be written to a dedicated logging system or to a log management software, where it is stored in a database or on a different computer system.

Event logs may record events taking place in the execution of a manufacturing process or system in order to provide an audit trail that can be used to understand the activity of the manufacturing process or system and to diagnose problems. They may be helpful to understand the activities of a complex manufacturing process or system, particularly in the case of an automated manufacturing process with little user/operator interaction.

It can also be useful to combine log file entries from multiple machines deployed in a manufacturing process. This approach, in combination with statistical analysis, may yield correlations between seemingly unrelated events on different machines.

According to this disclosure, the event associated with a machine may comprise at least one of a problem, an error, one or more operations, a phase transition of the manufacturing process, an update of settings of the machine, and an alarm.

According to various examples, the event may comprise event information, e.g., an Event Descriptor. The event information may comprise at least one of a name of the event, a time of the occurrence of the event, one or more components of the machine associated with the event, and a type of the event.

According to this disclosure, the data of the at least one parameter may comprise a time series of measurements of the at least one parameter in a predefined time window preceding the occurrence of the event. For example, for each of the at least one parameter, a respective time series of the measurement data may be extracted or collected in the predefined time window preceding the occurrence of the event.

According to various examples, the at least one parameter associated with the manufacturing process may comprise parameters associated with the machine, parameters associated with one or more other machines deployed in the manufacturing process upstream or downstream of the machine, and/or parameters associated with one or more products processed by the machine.

For example, the parameters associated with the machine and the one or more other machines may comprise at least one of a voltage, a pressure, a vibration, a rotation, a temperature, and a motor speed. The parameters associated with one or more products processed by the machine may comprise one or more quality parameters as defined by standards of the International Organization for Standardization (ISO), e.g., ISO 9000.

According to this disclosure, the temporal parameter may indicate availability of a machine deployed in a manufacturing process. For example, the temporal parameter may comprise or correspond to a temporal parameter of machine availability.

According to this disclosure, the temporal parameter (or the temporal parameter of machine availability) may comprise at least one of a prediction of a downtime of the machine, a probability of an occurrence of the downtime within a predefined duration of time, a duration of the downtime, a significance of the event to the occurrence of the downtime, a delay of the manufacturing process due to the event, a process lead time to produce a part using the manufacturing process.

According to various examples, the process lead time to produce a part using the manufacturing process may be predicted or determined by adding a productive time and the duration of the downtime together.

According to various examples, the manufacturing process may comprise a car manufacturing process and the machine may comprise a coating machine. Alternatively, the manufacturing process may comprise a steel hardening process or a process of instant coffee production, and the machine may comprise any machine involved in such a manufacturing process.

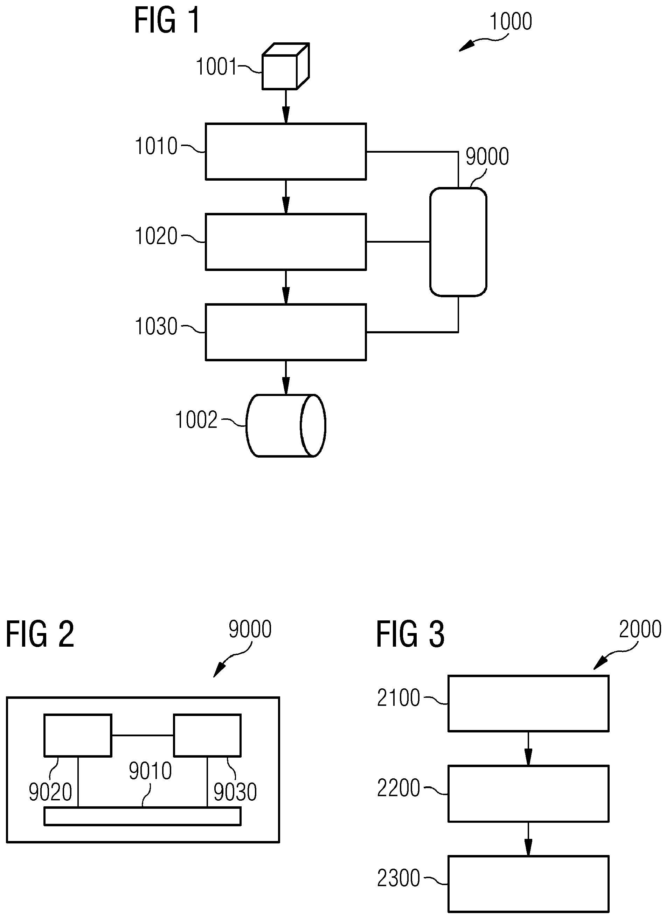

An exemplary system 1000 for a manufacturing process is illustrated in FIG. 1. The system 1000 includes multiple machines 1010, 1020, and 1030 for transforming raw materials 1001 into finished goods 1002.

These machines 1010, 1020, and 1030 may be controlled by a computing device 9000 for performing the manufacturing process. Each of the machines 1010, 1020, and 1030 may comprise one or more sensors (not shown in FIG. 1) for obtaining measurements or data of one or more parameters associated with the manufacturing process, and the machines 1010, 1020, and 1030 may be respectively or collectively controlled based on the measurements or data of the one or more parameters associated with the manufacturing process. For example, the computing device 9000 may execute one or more software for processing the measurements/data of parameters associated with the manufacturing process and generate control information for each of the machines 1010, 1020, and 1030.

Alternatively or additionally, the system 1000 may comprise a database for storing the measurements or data of the one or more parameters associated with the manufacturing process and/or the control information generated for each of the machines 1010, 1020, and 1030.

According to various examples, the computing device 9000 may communicate with each of the machines 1010, 1020, and 1030 via wireless communication systems, e.g., Bluetooth, Wi-Fi, Global System for Mobile Communications (GSM), Universal Mobile Telecommunications System (UMTS), Long-Term Evolution (LTE) or 5G New Radio (NR). Any wired communication technologies can also be used in the system 1000.

Alternatively or optionally, the computing device 9000 may be a cloud-based server, which is hosted and delivered over a network, e.g., the Internet, and accessed on demand by multiple systems for different or the same manufacturing processes.

For example, the sensors (not shown in FIG. 1) mounted on or embedded in one or more of the machines 1010, 1020, and 1030 may be parts of a network of Internet of Things (IoT) for obtaining data or measurements of one or more parameters associated with the manufacturing process. The network of IoT may connect to a cloud-based server or an edge server, e.g., the server 9000.

According to various examples, the server 9000 may run a maintenance management system, e.g., a Manufacturing Equipment/Machine Maintenance Software, for managing one or more of the machines 1010, 1020, and 1030. Additionally or optionally, the server 9000 may run a manufacturing execution system. The data or measurements of one or more parameters associated with the manufacturing process, which are obtained by the network of IoT, may be directly linked to corresponding product information that may be already available in the maintenance management system and/or the manufacturing execution system.

As a general rule, analysis of the manufacturing IoT data, e.g., data or measurements obtained by one or more of the sensors, with corresponding machine maintenance and manufacturing executing system data in a serial production may enable additional functionality to discover reasons for the production interruptions and delays based not only on expert experience but on statistical dependencies between various manufacturing data obtained in real-time.

According to various examples, the prediction of the temporal parameter (or the temporal parameter of machine availability) associated with the event may be determined using a machine learning algorithm.

For example, the machine learning algorithm may be executed by the server 9000 for detection of anomalies in the data or measurements obtained by one or more of the sensors and for prediction of future results based on historical data. Alternatively or optionally, the machine learning algorithm may perform the detection and/or the prediction based on both the data or measurements obtained by one or more of the sensors and data obtained from corresponding machine maintenance system and/or manufacturing executing system. Such detection and/or prediction may be performed in real-time.

According to various examples, the machines 1010, 1020, and 1030 may be controlled by a control system comprising multiple computing devices such as the computing device 9000. Each of the machines 1010, 1020, and 1030 may be respectively controlled by an individual computing device.

According to this disclosure, an automatic method may be executed by the server 9000 to predict manufacturing process interruptions and/or delays based on sensor data of a network of IoT utilizing synergy of cloud computing and/or edge computing and machine learning technologies to facilitate reliable, precise, and real-time manufacturing process analysis and/or improvement and/or adjustment.

As a general rule, various kinds and types of manufacturing processes can be subject to the techniques disclosed herein, e.g., a steel hardening process, an instant coffee production process, a printed circuit board fabrication process.

FIG. 2 is a block diagram of a computing device 9000 according to various examples. The computing device 9000 may comprise a processor 9020, a memory 9030, and an input/output interface 9010.

According to various examples, it is possible to output control data/information via the input/output interface 9010 to thereby control the machines 1010, 1020, and 1030 of a system for a manufacturing process such as the system 1000. Accordingly, the manufacturing process may be improved or adjusted.

The input/output interface 9010 may include a human machine interface via which a user interface can be provided to a user, e.g., an engineer. The user interface could be, e.g., a graphical user interface such as a web-based user interface.

The processor 9020 is configured to load program code from the memory 9030 and execute the program code. Upon executing the program code, the processor 9020 performs techniques as disclosed herein. For instance, the processor 9020 can perform techniques as disclosed in connection with FIG. 3.

FIG. 3 is a flowchart of a method 2000 according to various examples. The method 2000 of FIG. 3 pertains to determining a prediction of a temporal parameter associated with an event. The event is associated with a machine deployed in a manufacturing process, e.g., any one of the machines 1010, 1020, and 1030 of the system 1000 of FIG. 1. The manufacturing process may be performed by one or more machines, e.g., the machines 1010, 1020, and 1030 of the system 1000 of FIG. 1. For example, the method 2000 may be executed by a computing device such as the computing device 9000 of FIG. 1 or 2. The method 2000 may be executed by the processor 9020 upon loading program code from the memory 9030 and upon executing the program code. Details of the method 2000 are described in the following.

At block 2100: determining, based on an event log associated with a machine deployed in a manufacturing process, an occurrence of an event associated with the machine.

In general, an event log may offer a high level view of physical events happening on the machine deployed in the manufacturing process. Each of the event may be triggered by multiple physical components of the machine and/or by multiple physical phenomena.

For example, for each of the machines 1010, 1020, and 1030 of the system 1000 of FIG. 1, a respective event log may be stored in a database (not shown in FIG. 1) of the system 1000, when the machines 1010, 1020, and 1030 are in operation or use for a manufacturing process. Alternatively or optionally, when an event occurs in the machine, a signal indicative of the event may be transmitted to the computing device 9000 in real-time.

The occurrence of the event associated with the machine may be determined by parsing a log file storing the event log associated with the machine or by processing the signal received from the machine.

At block 2200: obtaining data of at least one parameter associated with the manufacturing process.

According to various examples, the data may be obtained from a database, an edge node or a computing device connecting to the machine. Alternatively or additionally, the data may be obtained directly from one or more sensors mounted on or embedded in the machine, e.g., any one of the machines 1010, 1020, and 1030 of the system 1000.

According to various examples, the data may be obtained from a maintenance management system and/or a manufacturing execution system associated with the machine.

According to various examples, the data may comprise a time series of measurements being produced by the machine. For example, for each of the at least one parameter, a respective time series of the measurement data may be collected and stored in a database during the whole life cycle of the machine. Each data point of the time series of measurements may be associated with a time stamp indicating when a respective data point was collected. For example, when a part of the data associated with a specific duration of time are needed, respective part of the data can be extracted from the database based on respective time stamps.

At block 2300: determining, based on the event and the data, a prediction of a temporal parameter associated with the event.

According to various examples, the temporal parameter associated with the event may comprise at least one of a prediction of a downtime of the machine, a probability of an occurrence of the downtime within a predefined duration of time, a duration of the downtime, a significance of the event to the occurrence of the downtime, a delay of the manufacturing process due to the event, a process lead time to produce a part using the manufacturing process.

For example, the prediction of a downtime of the machine may comprise an unplanned downtime which causes a manufacturing time loss. The probability of the occurrence of the (unplanned) downtime may comprise a value ranging from 0 to 1. The duration of the (unplanned) downtime may be several minutes, hours, or even days. The significance of the event to the occurrence of the downtime may comprise a statistical significance, e.g., the P value and/or the confidence interval.

According to various examples, the prediction of the temporal parameter associated with the event may be determined using a (trained) machine learning algorithm.

For example, the machine learning algorithm may be executed by a cloud server, a server located in the same network as the machine, or an edge server. The machine learning algorithm may be fed with the event and the data of the at least one parameter to determine the prediction of the temporal parameter associated with the event.

According to various examples, the method 2000 may further comprise determining, based on the data of the at least one parameter, a state of the machine, and the state of the machine comprises a productive state, a non-productive state, or a production-impaired state.

According to various examples, the method 2000 may also comprise carrying out maintenance of the machine based on said prediction of the temporal parameter; and/or adjusting the manufacturing process based on said prediction of the temporal parameter.

For example, if a probability of an occurrence of an unplanned downtime within a predefined duration of time is more than a predefined value, e.g., 0.3 or 0.5, a maintenance of the machine may be carried out. On the other hand, if the probability of the occurrence of an unplanned downtime within a predefined duration of time is less than (or equal to) the predefined value, a maintenance of the machine may not be carried out.

According to various examples, the method 2000 may further comprise obtaining event information associated with the event. Said determining of the prediction of the temporal parameter at block 2300 may be based on the event information, and the event information may comprise at least one of a name of the event, a time of the occurrence of the event, one or more components of the machine associated with the event, and a type of the event.

According to this disclosure, the method 2000 may use a machine learning algorithm based on, e.g., IoT data from manufacturing machines in a cloud-based environment, e.g., MindSphere, Amazon Web Services, or Microsoft Azure. The method 2000 may utilize synergy of cloud computing, IoT, and machine learning technologies to ensure real-time prediction of a temporal parameter associated with an event, e.g., a manufacturing downtime, based on analysis of actual parameters of the manufacturing machines and further manufacturing information provided in form of time series and event data. This method 2000 may implement cloud-based environment to run the machine learning algorithm/model training and inference tasks and to store and access IoT data related to manufacturing data.

According to this disclosure, various types of machine learning algorithms can be applied to predict the temporal parameter associated with an event. For instance, for the prediction of the downtime duration, the regression models can be applied like linear regression, decision tree-based regressors like decision tree, random forest, gradient boosting, extreme Gradient Boosting, or various neuron network-based regressors or other types of regressors. For the prediction of the nonproductive state occurrence corresponding classification algorithms may be used.

According to various examples, in the method 2000, the time series data from various machine sensors and further external devices related to the manufacturing process may be continuously collected. Additionally or optionally, machine messages and alarms generated by the machine controller may be collected in the form of events. Additionally or optionally, as events may be collected the time points related to the change of the process phase, machine program and further process settings. Further source of events may be the information provided by the process operators or triggered by the manufacturing execution system in the form of catalogized messages with corresponding time stamp.

According to the disclosure, various training methods of machine learning algorithms may be applied to train the machine learning algorithm, such as supervised learning, unsupervised learning, semi-supervised learning, reinforce learning and etc.

Preferably, the machine learning algorithm may be trained using training data based on supervised learning techniques. The training process can include determining a loss value based on a comparison between a prediction of the machine learning algorithm and a ground truth. A loss function can provide the loss value by performing the comparison. Based on the loss value, it is then possible to adjust the weights or parameters of the machine learning algorithm. Here, an optimization algorithm, e.g., gradient descent, can be employed. Backpropagation can be an alternative.

For example, machine events and process data may be continuously collected and may be matched with, e.g., a downtime within a selected response time. Alternatively or additionally, any type of data collected by an OEE app can be used to train the machine learning algorithm. The machine learning algorithm may be trained to predict type and/or duration of downtime.

According to various examples, the machine learning algorithm may be trained based on historical events and process data collected over sufficient time windows to build a reliable and accurate algorithm/model. The algorithm/model accuracy may be validated for a selected portion of the historical data used for testing the model accuracy.

According to this disclosure, the accuracy of the model trained on the train data set may be evaluated with input of the testing data set into the model, generation of the corresponding prediction results and comparison of the true and predicted results for the test data set. Various accuracy metrics may be used to assess model accuracy. For example, mean absolute error, root mean square error, minimum and maximum deviations from the true value may be used for the regression problems and evaluation of the confusion matrix with accuracy rate, precision and recall parameters may be used for the classification problems.

According to various examples, the best-performing model with the highest accuracy results proven with the test data set may be selected for the product application. The machine learning algorithm or model may be able to evaluate feature importance to identify the most important predictor features representing process factors which may be the root cause of the downtimes. This may enable a better understanding and ability to explain the process influences based on the statistical process analysis implemented in the machine learning algorithm.

FIG. 5 schematically illustrates an exemplary working flow 3000 according to various examples. The working flow may be used for determining a prediction of a temporal parameter associated with an event using the method 2000 as described above.

According to various examples, once an event 3001, 3002, or 3003 is generated, a state of a machine may be determined based on the parameters extracted from a time series data provided by sensors mounted on or embedded in the machine. The time series data may comprise data points of at least one parameter in a predefined time window preceding the occurrence of the event. For example, for determining the state of the machine at t2, the time series data may comprise data points collected or obtained from t1 to t2, and for determining the state of the machine at t3, the time series data may comprise data points collected or obtained from t2 to t3, or from t1 to t3.

After determining an occurrence of an event 3001, 3002, or 3003, data of at least one parameter associated with a manufacturing process may be obtained. For example, at t1, the event 3003 occurred. the machine parameters in combination with the event descriptor or type of the event may be obtained to predict, using the method 2000, downtime 3101 potentially associated with the event 3003 under the process conditions at t1. Similarly, downtime 3102, 3103, and 3104 potentially associated with the event 3003 can be also determined or predicted using the method 2000.

According to various examples, for each occurrence of a new event, it may be checked, if the machine changes the state from productive to nonproductive within a certain predefined reaction time 3201 defined as a time interval between the occurrence of the event and the change of the machine state to nonproductive. For example, at t1, t2, or t4, after occurrence of the event 3003, the machine changes the state from productive to nonproductive within the predefined reaction time 3201. At t3, after occurrence of the event 3003, the machine changes the state from productive to nonproductive outside the predefined reaction time 3201.

If the machine changes the state from productive to nonproductive within the reaction time 3201, the respective downtime duration 3101, 3102, and 3104 related to a respective event may be calculated starting from the first timepoint of nonproductivity until the next productive state.

The respective downtime duration 3101, 3102, and 3104 may be determined using a machine learning algorithm described above, e.g., by solving a regression problem, to predict manufacturing delay based on the data extracted from the event descriptor (as a categorical variable), process parameters (as numerical or categorical variables), timerelated features and further features describing the process sate immediately before an event occurred.

According to various examples, the machine learning algorithm can predict, if the downtime is expected within the reaction time 3201 after the event, e.g., by solving a classification problem.

According to various examples, a respective process lead time 3301, 3302, and 3303 to produce a part using the manufacturing process may be predicted or determined by adding a respective productive time and a duration of the respective downtime 3101, 3102, and 3104 together.

Additionally or optionally, a respective technical issue duration, e.g., 3501, 3502, and 3503, may be predicted or determined as a duration of time from the start of a respective event, e.g., 3003, to the end of a corresponding downtime duration, e.g., 3101, 3102, and 3104, associated with the respective event.

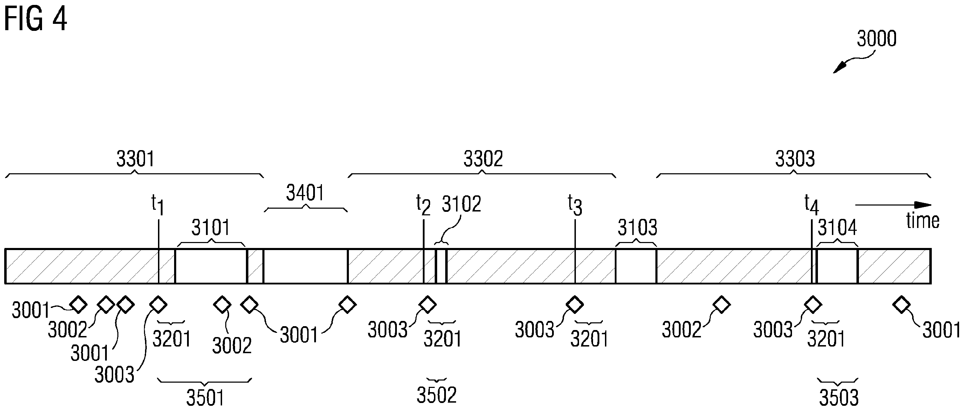

As shown in FIG. 4, the manufacturing process may comprise a planned downtime or pause 3401 of the machine for, e.g., carrying out maintenance.

According to this disclosure, in a productive mode, a trained machine learning algorithms inference may be triggered at each occurrence of new events, e.g., 3001, 3002, and 3003, to predict a duration of the downtime, e.g., 3101, 3102, and 3104, or downtime occurrence expected after this event under respective production conditions. The prediction of the upcoming downtime may be implemented in a cloud-based application or other software solution that can be used for faster reaction on an unplanned downtime and for optimization or adjustment of a manufacturing process to avoid downtime reasons discovered by the machine learning algorithm. By using the techniques disclosed herein, a duration of unplanned downtime related to multiple reasons, e.g., conditions of one or more machine components and/or various external reasons, can be precisely and reliably predicted.

According to this disclosure, a complete, practical, and realistic method to predict production downtime based on an event and manufacturing IoT data is provided. Depending on identified reasons for downtime, the prediction results can be used for the overall manufacturing process optimization or adjustment, e.g., optimization/adjustment of maintenance and/or optimization/adjustment of the process operation planning, enduring reduction of the overall lead time.

An occurrence of the event is determined based on an event log associated with the machine. For example, the event log may be stored in a database connected to the server 9000. The prediction of the temporal parameter is determined based on the event and on data of at least one parameter associated with the manufacturing process. For example, the data of at least one parameter associated with the manufacturing process may be obtained by sensors (not shown in FIG. 1) mounted on or embedded in one or more of the machines 1010, 1020, and 1030.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

## Claims

1. A computer-implemented method (2000), the method (2000) comprising:
- determining (2100), based on an event log associated with a machine (1010, 1020, 1030) deployed in a manufacturing process, an occurrence of an event (3001, 3002, 3003) associated with the machine;
- obtaining (2200) data of at least one parameter associated with the manufacturing process; and
- determining (2300), based on the event (3001, 3002, 3003) and the data, a prediction of a temporal parameter associated with the event (3001, 3002, 3003).

2. The computer-implemented method (2000) of claim 1,
wherein the temporal parameter comprises at least one of a prediction of a downtime of the machine, a probability of an occurrence of the downtime within a predefined duration of time (3201), a duration of the downtime (3101, 3102, 3103, 3104), a significance of the event (3001, 3002, 3003) to the occurrence of the downtime, a delay of the manufacturing process due to the event (3001, 3002, 3003), a process lead time (3301, 3302, 3303) to produce a part using the manufacturing process.

3. The computer-implemented method (2000) of claim 1 or 2,
wherein the data comprises a time series of measurements of the at least one parameter in a predefined time window preceding the occurrence of the event (3001, 3002, 3003).

4. The computer-implemented method (2000) of any one of the preceding claims, the method (2000) further comprising:
- determining, based on the data, a state of the machine, wherein the state of the machine (1010, 1020, 1030) comprises a productive state, a non-productive state, or a production-impaired state.

5. The computer-implemented method (2000) of any one of the preceding claims, the method (2000) further comprising:
- carrying out maintenance of the machine (1010, 1020, 1030) based on said prediction of the temporal parameter; and/or
- adjusting the manufacturing process based on said prediction of the temporal parameter.

6. The computer-implemented method (2000) of any one of the preceding claims,
wherein the event (3001, 3002, 3003) comprises at least one of a problem, an error, one or more operations, a phase transition of the manufacturing process, an update of settings of the machine, and an alarm.

7. The computer-implemented method (2000) of any one of the preceding claims, further comprising:
- obtaining event information associated with the event (3001, 3002, 3003),
wherein said determining of the prediction of the temporal parameter is based on the event information, and
wherein the event information comprises at least one of a name of the event (3001, 3002, 3003), a time (t1, t2, t3, t4) of the occurrence of the event (3001, 3002, 3003), one or more components of the machine (1010, 1020, 1030) associated with the event (3001, 3002, 3003), and a type of the event (3001, 3002, 3003).

8. The computer-implemented method (2000) of any one of the preceding claims,
wherein the at least one parameter associated with the manufacturing process comprises parameters associated with the machine, parameters associated with one or more other machines deployed in the manufacturing process upstream or downstream of the machine, and/or parameters associated with one or more products processed by the machine.

9. The computer-implemented method (2000) of claim 8,
wherein the parameters associated with the machine (1010, 1020, 1030) and the one or more other machines comprise at least one of a voltage, a pressure, a vibration, a rotation, a temperature, and a motor speed.

10. The computer-implemented method (2000) of any one of the preceding claims,
wherein said determining of the prediction of the temporal parameter is using a machine learning algorithm.

11. A computing device (9000), the device (9000) comprising a processor (9020) and a memory (9030), wherein upon loading and executing program code from the memory (9030), the processor (9020) is configured to perform the method (2000) of any one of the preceding claims.

12. A computer program product or a computer program or a computer-readable storage medium includes program code being executed by at least one processor (9020), wherein upon executing the program code, the at least one processor (9020) is configured to perform the method (2000) according to any one of claims 1 to 10.
